(19) Europäisches Patentamt
European Patent Office
Office européen des brevets

(11) **EP 2 752 499 B1**

(12) **EUROPEAN PATENT SPECIFICATION**

(45) Date of publication and mention
of the grant of the patent:
**05.10.2016 Bulletin 2016/40**

(51) Int Cl.:
*C22C 38/00* *(2006.01)*     *B21C 37/08* *(2006.01)*
*C21D 8/10* *(2006.01)*     *C22C 38/14* *(2006.01)*
*C22C 38/58* *(2006.01)*     *C21D 8/02* *(2006.01)*
*C21D 9/08* *(2006.01)*     *C22C 38/02* *(2006.01)*
*C22C 38/04* *(2006.01)*     *C22C 38/06* *(2006.01)*
*C22C 38/08* *(2006.01)*     *C22C 38/12* *(2006.01)*
*C22C 38/16* *(2006.01)*     *C22C 38/18* *(2006.01)*
*F16L 9/02* *(2006.01)*     *F16L 9/17* *(2006.01)*
*F16L 13/02* *(2006.01)*     *C22C 38/26* *(2006.01)*
*C22C 38/28* *(2006.01)*     *C22C 38/48* *(2006.01)*

(21) Application number: **12826306.8**

(22) Date of filing: **22.08.2012**

(86) International application number:
**PCT/JP2012/071226**

(87) International publication number:
**WO 2013/027779 (28.02.2013 Gazette 2013/09)**

(54) **THICK WALL ELECTRIC RESISTANCE WELDED STEEL PIPE AND METHOD OF PRODUCTION OF SAME**

DICKWANDIGES WIDERSTANDGESCHWEISSTES STAHLROHR UND VERFAHREN ZU SEINER HERSTELLUNG

TUBE D'ACIER SOUDÉ PAR RÉSISTANCE ÉLECTRIQUE À PAROI ÉPAISSE ET PROCÉDÉ DE FABRICATION DE CE DERNIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.08.2011 JP 2011181571**

(43) Date of publication of application:
**09.07.2014 Bulletin 2014/28**

(73) Proprietor: **Nippon Steel & Sumitomo Metal Corporation**
**Tokyo 100-8071 (JP)**

(72) Inventors:
• **SHINOHARA, Yasuhiro**
**Tokyo 100-8071 (JP)**
• **ASAHI, Hitoshi**
**Tokyo 100-8071 (JP)**
• **NAGAI, Kensuke**
**Tokyo 100-8071 (JP)**

(74) Representative: **Vossius & Partner**
**Patentanwälte Rechtsanwälte mbB**
**Siebertstrasse 3**
**81675 München (DE)**

(56) References cited:
**EP-A1- 1 568 792**     **EP-A1- 2 192 203**
**EP-A1- 2 264 205**     **WO-A1-2009/014238**
**WO-A1-2011/099408**     **JP-A- H07 216 500**
**JP-A- H08 337 816**     **JP-A- 2005 290 546**
**JP-A- 2009 270 197**

**Description**

Technical Field

The present invention relates to thick wall electric resistance welded steel pipe which is suitable for line pipe for transporting crude oil and natural gas etc. and to a method of production of the same.

Background Art

Line pipe which transports crude oil, natural gas, etc. is sometimes deformed due to earthquakes, shifts in the earth's crust, etc. Line pipe buckles at locations where deformation concentrates, so there is a correlation between the deformation performance (deformability) and shape of the steel pipe. Electric resistance welded steel pipe which is excellent in dimensional precision is excellent in buckling resistance.

The yield ratio (YS/TS, hereinafter also referred to as "Y/T"), expressed by the ratio of the yield strength (YS) to the tensile strength (TS), is an indicator of deformation performance. The lower the Y/T, the larger the extra margin in shaping and the better the deformation performance is evaluated as.

In recent years, as the method of laying submarine line pipe, the method of welding steel pipes together in advance on land to produce long pipe, reeling it on a spool on a reel barge, and unreeling the pipe from the spool on the ocean while laying it on the sea floor has sometimes been used. When employing this method, the pipe is subjected to plastic strain due to the reeling and unreeling. Therefore, if the deformation performance of steel pipe is not sufficient, there is a concern over local buckling and over fracture starting from the opposite side.

In PLT 1, to deal with such a problem, a low Y/T steel pipe which can prevent pipe buckling at the time of being laid has been proposed.

In PLTs 2 and 3, as the material for low Y/T electric resistance welded steel pipe, hot rolled steel plate with a metal micro-structure of a dualphase micro-structure comprised of ferrite and of martensite, bainite, pearlite, and other hard phases and a method of production of the same have been proposed.

Citations List

Patent Literature

PLT 1: Japanese Patent Publication No. 3-211255 A1
PLT 2: Japanese Patent Publication No. 63-227715 A1
PLT 3: Japanese Patent Publication No. 08-337816 A1

EP2192203 also discloses thick wall electric resistance welded steel pipes.

Summary of Invention

Technical Problem

To prevent submarine line pipe from being collapsed by the water pressure, steel pipe with a large wall thickness (t) and a small outside diameter (D), that is, steel pipe with a high wall thickness/outside diameter ratio (t/D), is used. Further, for steel pipe which is laid while reeling and unreeling it, steel pipe with a wall thickness/outside diameter ratio of 4% or more is used. Furthermore, when laying this in cold regions, low temperature toughness is also demanded.

In the case of electric resistance welded steel pipe, the pipeforming strain at the time of forming becomes greater compared with UOE steel pipe. If the wall thickness/outside diameter ratio of the steel pipe becomes higher, the pipeforming strain at the time of shaping becomes further higher. For this reason, even if using conventional hot rolled steel plate with a low Y/T, due to the effects of pipeforming strain, the Y/T of the electric resistance welded steel pipe exceeds 95%. For this reason, reeling and unreeling sometimes cause the steel pipe to buckle.

Further, to lower the Y/T, it is necessary to make a dual-phase micro-structure comprised of soft phases and hard phases, but with a dual-phase micro-structure comprised of ferrite and martensite, low temperature toughness is difficult to secure.

The present invention was made in consideration of this situation and has as its problem to provide API X60 to X70 grade thick wall electric resistance welded steel pipe which is suppressed in the rise of Y/T of the thick wall electric resistance welded steel pipe at the time of pipeforming by controlling the structure of the hot rolled steel plate used as the base material steel plate so as to give a Y/T low enough so that reeling and unreeling do not cause buckling and which is also superior in low temperature toughness and to provide a method of production of the same.

Solution to Problem

Conventional electric resistance welded steel pipe for line pipe use is usually raised in strength by adding an over 0.03% amount of Nb, coiling the steel plate at around 600°C in the process of production of the material of the hot rolled steel plate, and causing fine Nb carbonitrides to precipitate. Fine precipitates of Nb contribute to a rise in the yield strength, but do not cause changes in the subsequent work hardening behavior. Therefore, conventional electric resistance welded steel pipe for line pipe use had a larger rise in yield strength compared with the rise in tensile strength and, as a result, a higher Y/T.

The inventors studied methods for lowering the Y/T of thick wall electric resistance welded steel pipe by controlling the hot rolled micro-structure by the chemical composition of the base material steel plate and the hot rolling conditions. As a result, they obtained the discovery that it is possible to make the content of Nb smaller than in the past and furthermore possible to establish suitable hot rolling conditions and perform accelerated cooling in two stages after the hot rolling so as to suppress the precipitation of Nb carbonitrides and obtain a dual-phase micro-structure and as a result secure a low Y/T. Furthermore, they obtained the discovery that it is necessary to make the hard phases which contribute to lowering the Y/T one or both of bainite and pearlite which have little effect on low temperature toughness.

The present invention was made based on the above discoveries and has as its gist the following:

(1) Thick wall electric resistance welded steel pipe with a wall thickness/outside diameter ratio of 4.0 to 7.0% which is comprised of a base material steel plate shaped into a tube and welded by electric resistance welding, the thick wall electric resistance welded steel pipe characterized in that the base material steel plate has a chemical composition which contains, by mass%, C: 0.06 to 0.15%, Mn: 1.00 to 1.65%, Ti: 0.005 to 0.020%, Nb: 0.005 to 0.030%, and N: 0.001 to 0.006%, restricts P to 0.02% or less and S to 0.005% or less, contains as optional added elements Si: 0.45% or less, Al: 0.08% or less, Mo: less than 0.20%, Cu: 0.50% or less, Ni: 0.50% or less, Cr: 1.00% or less, V: 0.10% or less, Ca: 0.0050% or less, and REM: 0.0050% or less, has a Ceq which is found by the following formula (1) of 0.32 to 0.43, and has a balance of Fe and unavoidable impurities, a metal structure of the base material steel plate containing, by area ratio, 50 to 92% of polygonal ferrite, the polygonal ferrite having an average grain size of 15 $\mu$m or less, an electric resistance weld zone having a hardness of Hv160 to 240, and a structure of the electric resistance weld zone being bainite, fine grain ferrite, and pearlite or fine grain ferrite and bainite:

$$Ceq=[C]+[Mn]/6+([Cr]+[Mo]+[V])/5+([Ni]+[Cu])/15... (1)$$

where, [C], [Mn], [Cr], [Mo], [V], [Ni], and [Cu] are respectively the contents [mass%] of C, Mn, Cr, Mo, V, Ni, and Cu, the case where they are not contained being indicated as 0.

(2) The thick wall electric resistance welded steel pipe as set forth in (1) characterized in that the base material steel plate has a metal structure with Nb carbonitrides of an average grain size of 40 to 100 nm.

(3) A method of production of thick wall electric resistance welded steel pipe characterized by casting steel which contains, by mass%, C: 0.06 to 0.15%, Mn: 1.00 to 1.65%, Ti: 0.005 to 0.020%, Nb: 0.005 to 0.030%, and N: 0.001 to 0.006%, restricts P to 0.02% or less, S to 0.005% or less, contains, as optional added elements, Si: 0.45% or less, Al: 0.05% or less, Mo: less than 0.20%, Cu: 0.50% or less, Ni: 0.50% or less, Cr: 1.00% or less, V: 0.10% or less, Ca: 0.0050% or less, and REM: 0.0050% or less, has a Ceq which is found by the following formula (1) of 0.32 to 0.43, and has a balance of Fe and unavoidable impurities, to obtain a steel slab, heating the steel slab 1050 to 1300°C, hot rolling this by a total final rolling rate of 35 to 90% to obtain hot rolled steel plate, cooling the hot rolled steel plate from an Ar$_3$ point or more to 630 to 720°C by a 5 to 20°C/s cooling rate for primary cooling, then cooling by a cooling rate faster than the primary cooling and not more than 60°C/s for secondary cooling, coiling at 450 to 600°C, shaping the coiled steel plate into a tube with a wall thickness/outside diameter ratio of 4.0 to 7.0%, welding the abutting faces by electric resistance welding, then heating the electric resistance weld zone to an Ac$_3$ point to 1100°C, then air cooling this to room temperature or water cooling to 200 to 650°C then air cooling it:

$$Ceq=[C]+[Mn]/6+([Cr]+[Mo]+[V])/5+([Ni]+[Cu])/15...(1)$$

where, [C], [Mn], [Cr], [Mo], [V], [Ni], and [Cu] are respectively the contents [mass%] of C, Mn, Cr, Mo, V, Ni, and Cu, the case where they are not contained being indicated as 0.

Advantageous Effects of Invention

According to the present invention, it is possible to provide a thick wall electric resistance welded steel pipe for line pipe use which achieves both a 95% or less, preferably 92% or less, low Y/T and low temperature toughness, and a method of production of the same.

Brief Description of Drawings

FIG. 1A is a view which shows the structure of the base material steel plate of the electric resistance welded steel pipe of the present invention which is comprised of polygonal ferrite and hard phases comprised of pearlite and bainite. FIG. 1B is a view which shows the structure of the base material steel plate of conventional electric resistance welded steel pipe which is comprised of bainitic ferrite.
FIG. 2 is a view which shows the relationship among the amount of C, the amount of Nb, and the Y/T in the examples of the present invention.

Description of Embodiments

To lower the Y/T of thick wall electric resistance welded steel pipe, it is important to control the structure of the material of the hot rolled steel plate. To lower the Y/T of hot rolled steel plate, it is necessary to make the structure of the hot rolled steel plate a dual-phase micro-structure comprised of soft phases and hard phases. Usually, dual-phase microstructures have soft phases of ferrite and hard phases of martensite. This is because martensite is extremely hard and remarkably raises the tensile strength and therefore contributes to a lower Y/T.

However, in the present invention, the hard phases are preferably made one or both of bainite and pearlite. The reason is that if making martensite the hard phases, the Y/T greatly falls, but the low temperature toughness is impaired. Furthermore, if the hard phases are martensite, the tensile strength excessively rises and overmatching of girth weld zones for welding steel pipes together becomes difficult and the buckling performance sometimes falls. On the other hand, bainite and pearlite contribute less to the rise in tensile strength compared with martensite, but have little detrimental effect on the toughness.

The soft phases of the dual-phase micro-structure of the base material steel plate of the present invention are polygonal ferrite. Polygonal ferrite contributes to a reduction in the Y/T, so the area ratio has to be made 50% or more. On the other hand, to secure the strength, hard phases are necessary, so the area rate of polygonal ferrite is made 92% or less.

Polygonal ferrite, bainite, and pearlite can be discerned by observing the microstructure revealed by Nytal etching through an optical microscope. Note that, the area rate of the polygonal ferrite is found by image analysis of the microstructure revealed by Nytal etching.

On the other hand, martensite cannot be discerned by Nytal etching. Martensite is not colored by Le Pera etching, so in the structure viewed under an optical microscope, is observed as whitened phases. That is, whether or not martensite is present in a structure can be confirmed by observing the structure by Le Pera etching.

Further, the metal structure also includes bainitic ferrite in a range not impairing the properties of the electric resistance welded steel pipe of the present invention, but bainitic ferrite is high in dislocation density. If present, the Y/T becomes higher, so it is preferable that bainitic ferrite not be present.

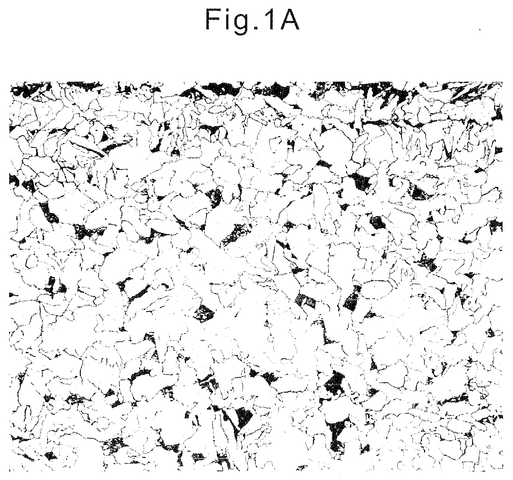

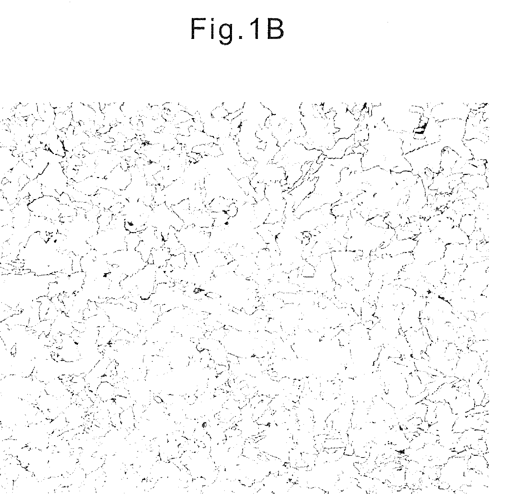

FIG. 1A shows the structure of the base material steel plate of the electric resistance welded steel pipe of the present invention which is comprised of polygonal ferrite and of hard phases comprised of pearlite and bainite, while FIG. 1B shows the structure of the base material steel plate of the conventional electric resistance welded steel pipe which is comprised of bainitic ferrite. The white parts in FIG. 1A are the relatively equiaxial grains of polygonal ferrite, while the black parts are bainite or pearlite. What is formed over the entire surface of FIG. 1B is irregular shaped bainitic ferrite.

The crystal grain size of polygonal ferrite has to be fine so as to secure the low temperature toughness of the base material of the electric resistance welded steel pipe. In the present invention, the polygonal ferrite grain size is made 15 $\mu$m or less. The smaller the polygonal ferrite grain size, the better, but making it less than 1 $\mu$m is technically difficult. If considering productivity, the polygonal ferrite grain size is preferably 1 $\mu$m or more. The polygonal ferrite grain size is found by image analysis of the microstructure revealed by Nytal etching or by the cutting method.

Even if the metal structure of the hot rolled steel plate is made a dual-phase micro-structure, if the Nb carbonitrides are too small, precipitation strengthening will sometimes cause the yield strength to excessively rise and the Y/T to become larger. For this reason, the average grain size of the Nb carbonitrides is preferably made 40 to 100 nm.

Nb carbonitrides can be identified by observing the structure by a transmission type electron microscope (TEM) and using an energy dispersive X-ray spectrometer (EDX) attached to the TEM. The average grain size of Nb carbonitrides is calculated by preparing an extraction replica sample, observing the structure by an TEM, and measuring the circle equivalent radii.

Furthermore, from the viewpoint of the deformation performance of electric resistance welded steel pipe, the structure of the electric resistance weld zone is made fine grain ferrite and pearlite or bainite and the hardness of the electric resistance weld zone is made Hv160 to 240. The structure of the electric resistance weld zone can be confirmed in the same way as the above structure of hot rolled steel plate.

Next, the components of the base material of the electric resistance welded steel pipe of the present invention will be explained. Note that, the components of the hot rolled steel plate used as the material of the electric resistance welded steel pipe are the same as the base material of the electric resistance welded steel pipe. The amounts of the components explained below are all mass%.

C: 0.06 to 0.15%

C is an element which is necessary for raising the strength. Further, it also contributes to lowering the Y/T, so in the electric resistance welded steel pipe of the present invention, the amount of C is increased over conventional electric resistance welded steel pipe and made 0.06% or more. On the other hand, if the amount of C exceeds 0.15%, polygonal ferrite is insufficiently formed, coarse carbides are formed, and the toughness is impaired, so the upper limit is made 0.15%. To secure the strength, the amount of C is preferably made 0.07% or more, more preferably is made 0.08% or more. To secure toughness, the amount of C is preferably made 0.14% or less, more preferably 0.12% or less.

Mn: 1.00 to 1.65%

Mn is an element which raises the hardenability of steel and contributes to the improvement of strength and toughness, so 1.00% or more is added. On the other hand, if excessively adding Mn, polygonal ferrite is insufficiently formed, martensite is formed, and the Y/T and toughness and other properties deteriorate, so the upper limit is made 1.65%. To secure the strength, the amount of Mn is preferably made 1.20% or more, more preferably 1.30% or more, still more preferably 1.35% or more. To secure toughness, the amount of Mn is preferably made 1.55% or less.

Ti: 0.005 to 0.020%

Ti is an element which forms carbonitrides and contributes to suppression of precipitation strengthening by fine Nb carbonitrides. Further, TiN refines the structure and contributes to improvement of toughness. To obtain these effects, 0.005% or more of Ti has to be added. On the other hand, if excessively adding Ti, coarsening of the TiN and precipitation hardening by TiC occur, the toughness deteriorates, and the Y/T rises, so 0.020% is made the upper limit. To refine the structure to secure toughness, the amount of Ti is preferably made 0.008% or more, more preferably 0.010% or more. On the other hand, to suppress the drop in toughness due to precipitates, the amount of Ti is preferably 0.018% or less, more preferably 0.015% or less.

Nb: 0.005 to 0.030%

Conventional electric resistance welded steel pipe for line pipe use usually had an over 0.03% amount of Nb added to improve the strength. However, in the electric resistance welded steel pipe for line pipe use of the present invention, to lower the Y/T, it is important to make the amount of Nb lower than the past. That is, the electric resistance welded steel pipe of the present invention has as features of its chemical composition a higher C, lower Nb, and lower Y/T compared with conventional electric resistance welded steel pipe.

Nb is an element which causes the recrystallization temperature to decrease. It suppresses recrystallization of austenite and contributes to refinement of the structure at the time of hot rolling and, further, forms Nb carbonitrides and contributes to precipitation strengthening as well, so 0.005% or more is added. On the other hand, if excessively adding Nb, the excessive precipitation strengthening causes the yield strength to rise and the Y/T to rise, so 0.030% is made the upper limit. To lower the Y/T, the amount of Nb is preferably made 0.015% or less.

N: 0.001 to 0.006%

N is an element which contributes to refinement of the structure by formation of nitrides, in particular TiN.

0.001% or more is included. To refine the crystal grains, 0.0015% or more of N is preferably included. The more preferable content is made 0.0020% or more. On the other hand, if the amount of N becomes excessive, coarse TiN is formed and the toughness deteriorates, so the upper limit is made 0.006%. Preferably, the amount of N is made 0.004% or less.

P: 0.02% or less

P is an impurity. The upper limit of content is made 0.02%. By reducing the amount of P, grain boundary fracture is prevented and the toughness is improved, so the amount of P is preferably 0.015% or less, more preferably 0.010% or less. A smaller amount of P is preferable, but from the balance of properties and cost, usually 0.001% or more is contained.

S: 0.005% or less

S is an impurity. The upper limit of content is made 0.005%. By reducing the amount of S, the MnS which is elongated by hot rolling is reduced and the toughness can be improved, so the amount of S is preferably 0.003% or less, more preferably 0.002% or less. A smaller amount of Si is preferable, but from the balance of properties and cost, usually 0.0001% or more is contained.

Further, to secure the strength, the carbon equivalent Ceq which is calculated by the following formula (2) must be made 0.32 or more. On the other hand, to secure the toughness, the Ceq must be made 0.43 or less. The Ceq is preferably 0.34 or more, more preferably 0.36 or more. The Ceq is preferably 0.42 or less, more preferably 0.40 or less.

$$Ceq = [C] + [Mn]/6 + ([Cr] + [Mo] + [V])/5 + ([Ni] + [Cu])/15 \ldots (1)$$

Here, [C], [Mn], [Cr], [Mo], [V], [Ni], and [Cu] are respectively the contents (mass%) of C, Mn, Cr, Mo, V, Ni, and Cu. Cr, Mo, V, Ni, and Cu are optional added elements. When intentionally not added, the above formula (1) is calculated with these as "0".

Si: 0.45% or less

Si is not an essential added element, but is effective as a deoxidizing agent. 0.01% or more is preferably added. Further, Si is an element which raises the strength by solution strengthening. 0.10% or more is preferably added, while 0.20% or more is more preferably added. If Si is added in over 0.45%, the ductility and toughness are impaired, so the upper limit is made 0.45%. To secure toughness, the amount of Si is preferably made 0.35% or less, more preferably 0.30% or less.

Al: 0.08% or less

Al is not an essential added element, but is effective as a deoxidizing agent. 0.001% or more is preferably added. To improve the effect of deoxidation, 0.010% or more of Al is preferably added while 0.015% or more is more preferably added. If Al is added over 0.08%, the inclusions increase and the ductility and toughness are impaired, so the content is limited to 0.08% or less. To secure toughness, the amount of Al is preferably made 0.05% or less, more preferably 0.03% or less.

Mo, Cu, Ni, Cr, and V are optional added elements and are not essential added elements. To improve the hardenability of the steel and raise the strength, one or more of these elements may be added.

Mo: less than 0.20%

Mo is an element which contributes to the increased strength of steel. However, if Mo is included, polygonal ferrite becomes harder to form and bainitic ferrite becomes easier to form. As a result, the steel becomes higher in Y/T, so Mo is preferably not added. If the hardenability is insufficient, so long as obtaining a metal structure in which 50 to 92% is polygonal ferrite, less than 0.20%, preferably 0.15% or less in range, may be added.

Cu: 0.50% or less

Cu is an element which improves the hardenability of steel. It also contributes to solution strengthening, so it is preferable to add 0.05% or more. On the other hand, if excessively adding Cu, the surface properties are sometimes impaired, so the upper limit is made 0.50% or less. From the viewpoint of economy, the amount of Cu is 0.30% or less.

Ni: 0.50% or less

Ni is an element which exhibits effects similar to Cu. It is an element which is effective for raising the strength without causing the toughness to deteriorate, so addition of 0.05% or more is preferable. When adding Cu, from the viewpoint of manufacturability, it is preferable to simultaneously add Ni. Ni is an expensive element, so the amount of Ni is made 0.50% or less, preferably 0.30% or less.

Cr: 1.00% or less

Cr is an element which is effective for improving the strength. Addition of 0.05% or more is preferable. However, if excessively adding Cr, when circumferentially welding the ends of steel pipes to obtain long pipes, the weldability sometimes deteriorates, so 1.0% is made the upper limit. The more preferable amount of Cr is 0.50% or less, more preferably 0.30% or less.

V: 0.10% or less

V is an element which forms carbides and nitrides and improves the strength of steel by precipitation strengthening. To effectively raise the strength, 0.01% or more is preferably added. On the other hand, if excessively adding V, the carbides and nitrides coarsen and sometimes the toughness is impaired, so the amount of V is made 0.10% or less. To lower the Y/T, the amount of V is preferably made 0.05% or less.

Furthermore, to control the morphology of the inclusions to improve the toughness, one or both of Ca and a REM may be added.

Ca: 0.0050% or less, REM: 0.0050% or less

Ca and REMs are elements effective for control of the morphology of sulfides. If adding one or both of Ca and a REM, these form spherical sulfides, so it is possible to suppress the formation of MnS stretched in the rolling direction. To obtain this effect, the amount of Ca and the amount of REM are both preferably made 0.0001% or more. On the other hand, if the amount of Ca and the amount of REM exceed 0.0050%, the coarse oxides increase and the toughness is degraded, so the amount of Ca and the amount of REMs are preferably 0.0050% or less.

The lower limits of the optional added elements Mo, Cu, Ni, Cr, V, Ca, and REM are not defined. Even 0% is possible. Further, even if amounts less than the preferable lower limits of the elements are contained, they have no detrimental effect, so this is allowed.

Next, the production conditions of the hot rolled steel plate of the material of the electric resistance welded steel pipe of the present invention will be explained.

In the present invention, the steel is melted, then cast to form a steel slab. The steel slab is heated and hot rolled, then is acceleratedly cooled in two stages. The result is then coiled and air cooled to produce hot rolled steel plate.

The steel of the present invention has a small content of Nb, so if the heating temperature of the steel slab is low, coarse polygonal ferrite will form, the strength will fall, and the toughness will easily deteriorate. Therefore, the heating temperature of the steel slab is made 1050°C or more so as to make the Nb and other elements forming carbides in solid solutions in the steel. Preferably, the heating temperature is made 1100°C or more, more preferably 1150°C or more. On the other hand, if the heating temperature is too high, the structure becomes coarse, so to prevent coarsening of the grain size of the polygonal ferrite, it is made 1300°C or less. To refine the grain size of the polygonal ferrite, preferably the heating temperature is made 1250°C or less, more preferably 1200°C or less.

The hot rolling has to be performed in the temperature region where the structure of the steel is the austenite. This is because if rolling after ferrite transformation has started, worked polygonal ferrite will be formed and the anisotropy of the properties will become greater. Therefore, the hot rolling has to be performed at the $Ar_3$ point or more where ferrite transformation at the time of cooling is started. Further, to obtain 15 μm or smaller polygonal ferrite, the total final reduction rate is made 35 to 90%.

After hot rolling, accelerated cooling is started at a temperature of the $Ar_3$ point or more. This is because if air cooling to less than the $Ar_3$ point where ferrite transformation is started after hot rolling, sometimes coarse polygonal ferrite will be produced, the strength will fall, and the toughness will deteriorate.

The $Ar_3$ point can be found from the heat dilatation when heating and cooling using a test material of the same components as the base material steel plate. Further, it can be found by the following formula (2) from the components of the base material steel plate.

**[0062]**

$$Ar_3(°C)=910-310[C]-80[Mn]-55[Ni]$$
$$-20[Cu]-15[Cr]-80[Mo]...(2)$$

Here, [C], [Mn], [Ni], [Cu], [Cr], and [Mo] are respectively the contents (mass%) of C, Mn, Ni, Cu, Cr, and Mo. Ni, Cu, Cr, and Mo are optional added elements. When intentionally not added, formula (2) is calculate with them as "0".

Accelerated cooling is performed for controlling the area rate and grain size of the polygonal ferrite and the type of hard phases. Further, accelerated cooling can be used to control the grain size of the Nb carbonitrides as well. In the present invention, the accelerated cooling is made two-stage cooling consisting of primary cooling, then secondary cooling at a larger cooling rate than this. Mainly, the primary cooling causes formation of polygonal ferrite, while the secondary cooling suppresses growth of crystal grains of Nb carbonitrides and polygonal ferrite.

The primary cooling is stopped at a temperature region of 630 to 720°C. If the stop temperature exceeds 720°C, the amount of production of polygonal ferrite would become less than 50% and the reduction of the Y/T would become insufficient. On the other hand, if the stop temperature becomes less than 630°C, the amount of polygonal ferrite would become 92% or more and the tensile strength would fall. Below, the stop temperature of the primary cooling will also be referred to as the "cooling rate switching temperature".

The cooling rate of the primary cooling is made 5 to 20°C/s. If the cooling rate of the primary cooling is less than 5°C/s, the Nb carbonitrides increase. If the cooling rate of the primary cooling is slow, the Nb carbonitrides become coarse, so the tensile strength falls and the Y/T becomes higher. To refine the polygonal ferrite grain size, the cooling rate of the primary cooling is preferably made 10°C/s or more. On the other hand, if making the cooling rate of the primary cooling 20°C/s or more, formation of polygonal ferrite would be suppressed and the area rate would become less than 50%. Therefore, the cooling rate of the primary cooling is made 5 to 20°C/s.

The cooling rate of the secondary cooling is made faster than the primary cooling. The upper limit is made 60°C/s. If the cooling rate of the secondary cooling exceeds 60°C/s, the Nb carbonitrides would become too fine and the Y/T would rise. If the cooling rate of the secondary cooling is slower than the primary cooling, the Nb carbonitrides would increase and the Y/T would rise. The cooling rate of the secondary cooling is preferably made 30°C/s or more so as to suppress polygonal ferrite grain growth. Here, the cooling rate is the value at the center position in the wall thickness. Direct measurement is not easy, but simulation is possible from the results of measurement of the water density and surface temperature.

The coiling temperature is made 450 to 600°C. If the coiling temperature of the hot rolled steel plate exceeds 600°C, Nb carbonitrides would excessively form, the yield strength would rise, and the Y/T would rise. If coiling at less than 450°C, martensite would form, the strength would rise, and the toughness would fall. The preferable coiling temperature is 500°C or more. 520°C or more is more preferable.

Next, the production conditions for electric resistance welded steel pipe obtained by shaping and welding the hot rolled steel plate will be explained. Electric resistance welded steel pipe is produced by shaping hot rolled steel plate into a tube, making the ends abut against each other, and welding the abutting faces by electric resistance welding.

The present invention relates to electric resistance welded steel pipe which is used for submarine line pipe etc., so to prevent crushing due to water pressure, the wall thickness/outside diameter ratio is made 4.0% or more. If the wall thickness/outside diameter ratio exceeds 7.0%, the pipeforming strain which is introduced to the electric resistance welded steel pipe will become larger and the rise in Y/T will not be able to be suppressed, so the wall thickness/outside diameter ratio of the electric resistance welded steel pipe is made 7.0% or less. Note that, if the wall thickness/outside diameter ratio is less than 4.0%, the rise in Y/T due to the pipeforming strain which is introduced into the electric resistance welded steel pipe is small and buckling due to reeling and unreeling seldom becomes a problem.

Furthermore, only the vicinity of the electric resistance weld zone is heated to the Ac$_3$ point to 1100°C, then the same portion is air cooled to room temperature or the same portion is water cooled to 200 to 650°C, then air cooled so as to heat treat the seam.

In electric resistance welding, the abutting parts are heated to make them melt and pressure is applied for joining them, so the electric resistance weld zone plastically deforms at a high temperature, then is rapidly cooled. For this reason, the electric resistance weld zone becomes harder than the base material. By applying such seam heat treatment, the structure of the electric resistance weld zone becomes fine grain ferrite and pearlite or bainite and, further, the hardness becomes Hv160 to 240, so the electric resistance welded steel pipe can be further raised in deformation performance.

Examples

Below, the advantageous effects of the present invention will be explained in more detail by examples.

Steels having the compositions of components of Table 1 were cast to obtain steel slabs which have thicknesses of 240 mm. These steel slabs were heated to the heating temperatures which are shown in Table 2, hot rolled at finish temperatures of the Ar₃ point or more, and water cooled under the conditions which are shown in Table 2 to obtain base material steel plates. Next, the obtained base material steel plates were shaped into tubes by a continuous roll shaping process and the end parts of the base material steel plates were made to abut against each other and were welded by electric resistance welding. After this, the weld zones of the electric resistance welding were heated and water cooled and the seams were heat treated.

The Ar₃ points of Table 2 were found from the contents (mass%) of C, Mn, Ni, Cu, Cr, and Mo which are shown in Table 1. Note that, Ni, Cu, Cr, and Mo are optional added elements. As shown by the blank fields in Table 1, when intentionally not adding them, the following formula (2) is calculated with these as "0".

$$Ar_3(°C)=910-310[C]-80[Mn]-55[Ni]-20[Cu]-15[Cr]-80[Mo]... (2)$$

From the center of wall thickness of each produced thick wall electric resistance welded steel pipe, a C cross-section (corresponding to plate thickness surface in direction perpendicular to rolling direction in hot rolling) sample for observation of the structure was taken. This was etched by Nytal and observed for structure and photographed through an optical microscope. The microstructure photograph was used to measure the area rate and grain size of the polygonal ferrite and judge the structures other than polygonal ferrite.

After this, Le Pera etching was performed, the structure was observed by an optical microscope, and the presence of any martensite was checked for. Furthermore, an extraction replica sample was prepared and observed under a TEM. The structural photograph was used to measure the particle size of the Nb carbonitrides. The Nb carbonitrides were identified by an EDX attached to the TEM.

Next, a full thickness arc-shaped tensile test piece was taken from the pipe axial direction at a 90 degree position from the weld zone of the thick wall electric resistance welded steel pipe based on JIS Z 2241 and was subjected to a tensile test at room temperature to find the yield strength (0.2% offset) and tensile strength.

Further, a V-notch test piece was taken from the base material steel plate of the thick wall electric resistance welded steel pipe based on JIS Z 2242 and was subjected to a Charpy test at -20°C to find the Charpy absorption energy. Note that, the V-notch test piece was taken using the circumferential direction as the longitudinal direction.

The production conditions are shown in Table 2, while the results of evaluation are shown in Table 3. In the "balance" of "metal structure" of Table 3, B means bainite, P means pearlite, and M means martensite. Further, in Tables 1 to 3, the underlines indicate outside the scope of the present invention.

Table 1

| Steel type | Chemical composition (mass %) | | | | | | | | | | | | | | | Ceq | Remarks |
|---|---|---|---|---|---|---|---|---|---|---|---|---|---|---|---|---|---|
| | C | Si | Mn | P | S | Nb | Al | Ti | N | Mo | Cu | Ni | Cr | V | Others | | |
| A | 0.100 | 0.25 | 1.55 | 0.010 | 0.0015 | 0.016 | 0.023 | 0.011 | 0.0033 | | | | | | | 0.36 | Inv. ex. |
| B | 0.147 | 0.34 | 1.35 | 0.007 | 0.0010 | 0.006 | 0.025 | 0.012 | 0.0030 | | | | | | | 0.37 | |
| C | 0.081 | 0.26 | 1.65 | 0.009 | 0.0018 | 0.030 | 0.022 | 0.013 | 0.0039 | | | | | | Ca: 0.0018 | 0.36 | |
| D | 0.105 | 3.18 | 1.35 | 0.010 | 0.0012 | 0.013 | 0.022 | 0.016 | 0.0033 | | 0.26 | 0.26 | | | | 0.36 | |
| E | 0.093 | 0.31 | 1.47 | 0.010 | 0.0012 | 0.011 | 0.024 | 0.011 | 0.0028 | 0.19 | | | | | | 0.38 | |
| F | 0.115 | 0.23 | 1.43 | 0.010 | 0.0012 | 0.025 | 0.018 | 0.015 | 0.0042 | | | | 0.35 | | | 0.42 | |
| G | 0.140 | 0.21 | 1.42 | 0.010 | 0.0012 | 0.029 | 0.019 | 0.013 | 0.0038 | | | | | 0.04 | | 0.38 | |
| H | 0.065 | 0.27 | 1.35 | 0.008 | 0.0009 | 0.011 | 0.019 | 0.011 | 0.0028 | 0.15 | | | | 0.05 | Ca: 0.0023 | 0.33 | |
| I | 0.083 | 0.28 | 1.31 | 0.009 | 0.0010 | 0.028 | 0.022 | 0.011 | 0.0029 | | 0.30 | 0.30 | 0.20 | | REM: 0.0018, | 0.38 | |
| AA | 0.062 | 0.21 | 0.95 | 0.010 | 0.0020 | 0.022 | 0.023 | 0.014 | 0.0032 | | | | 0.20 | | | 0.26 | Comp. ex. |
| A3 | 0.081 | 0.22 | 1.45 | 0.010 | 0.0022 | 0.035 | 0.048 | 0.011 | 0.0035 | | | | 0.22 | | | 0.37 | |
| AC | 0.160 | 0.45 | 1.55 | 0.020 | 0.0010 | 0.016 | 0.023 | 0.019 | 0.0048 | | | | | | | 0.42 | |
| AD | 0.082 | 0.20 | <u>1.68</u> | 0.010 | 0.0060 | 0.022 | 0.020 | 0.015 | 0.0030 | <u>0.35</u> | | | | | | 0.43 | |
| AE | 0.05 | 0.18 | 1.55 | 0.008 | 0.0015 | 0.035 | 0.02 | 0.011 | 0.0027 | | | | | 0.04 | | 0.32 | |

Table 2

| No. | Steel type | Ar3 [°C] | Hot rolling conditions | | | | | | | Heat treatment of electric resistance weld zone | | Remarks |
|---|---|---|---|---|---|---|---|---|---|---|---|---|
| | | | Heating temp. [°C] | Total final reduction rate [%] | Cooling start temp. [°C] | Primary cooling rate [°C/s] | Cooling rate switching temp. [°C] | Secondary cooling rate [°C/s] | Coiling temp. [°C] | Heating temp. [°C] | Cooling method | |
| 1 | A | 755 | 1200 | 70 | 800 | 15 | 650 | 48 | 500 | 960 | Water cooling (stopped at 550°C) | |
| 2 | B | 756 | 1200 | 65 | 800 | 15 | 650 | 48 | 500 | 960 | Water cooling (stopped at 650°C) | |
| 3 | C | 753 | 1200 | 88 | 800 | 20 | 650 | 25 | 580 | 960 | Water cooling (stopped at 500°C) | |
| 5 | E | 748 | 1200 | 75 | 800 | 5 | 650 | 15 | 580 | 930 | Water cooling (stopped at 350°C) | |
| 6 | F | 755 | 1200 | 65 | 800 | 5 | 650 | 15 | 580 | 1080 | Water cooling (stopped at 400°C) | Inv. ex. |
| 7 | G | 753 | 1200 | 48 | 800 | 10 | 650 | 30 | 580 | 1050 | Air cooling | |
| 8 | H | 770 | 1200 | 75 | 820 | 10 | 650 | 30 | 550 | 1020 | Air cooling | |
| 9 | I | 754 | 1250 | 65 | 820 | 15 | 720 | 30 | 580 | 1000 | Air cooling | |
| 10 | A | 755 | 1300 | 65 | 820 | 15 | 630 | 30 | 500 | 980 | Water cooling (stopped at 450°C) | |
| 11 | A | 755 | 1050 | 60 | 820 | 15 | 700 | 30 | 450 | 1080 | Air cooling | |
| 12 | A | 755 | 1150 | 80 | 820 | 15 | 650 | 30 | 580 | 920 | Water cooling (stopped at 450°C) | |

| No. | Steel type | Ar3 [°C] | Hot rolling conditions | | | | | | | Heat treatment of electric resistance weld zone | | Remarks |
| --- | --- | --- | --- | --- | --- | --- | --- | --- | --- | --- | --- | --- |
| | | | Heating temp. [°C] | Total final reduction rate [%] | Cooling start temp. [°C] | Primary cooling rate [°C/s] | Cooling rate switching temp. [°C] | Secondary cooling rate [°C/s] | Coiling temp. [°C] | Heating temp. [°C] | Cooling method | |
| 14 | A | 755 | 1200 | 40 | 800 | 15 | 630 | 10 | 550 | 980 | Air cooling | Comp. ex. |
| 15 | A | 755 | 1300 | 30 | 800 | 30 | 650 | 40 | 200 | 1080 | Water cooling (stopped at 450°C) | |
| 16 | A | 755 | 1050 | 80 | 800 | 20 | 740 | 30 | 550 | 920 | Air cooling | |
| 17 | AA | 788 | 1200 | 75 | 800 | 15 | 650 | 50 | 575 | 920 | Air cooling | |
| 18 | AB | 766 | 1200 | 65 | 800 | 15 | 650 | 20 | 575 | 980 | Water cooling (stopped at 450°C) | |
| 19 | AC | 736 | 1200 | 70 | 800 | 15 | 730 | 20 | 575 | 980 | Air cooling | |
| 20 | AD | 722 | 1200 | 65 | 800 | 15 | 730 | 20 | 575 | 920 | Water cooling (stopped at 100°C) | |
| 21 | AE | 771 | 1200 | 70 | 800 | 15 | 650 | 25 | 550 | 920 | Water cooling (stopped at 550°C) | |

Table 3

| No. | Wall thickness [mm] | Outside diameter [mm] | Wall thickness/outside diameter [%] | Polygonal ferrite | | Metal structure | Nb carbonitrides | Steel pipe properties | | | | Properties of electric resistance weld zone | | Remarks |
| | | | | Area rate [%] | Grain size [$\mu$m] | Bal. | Average grain size [nm] | YS [MPa] | TS [MPa] | Y/T [%] | vE$_{-20}$ [J] | Hardness [HV] | Structure | |
|---|---|---|---|---|---|---|---|---|---|---|---|---|---|---|
| 1 | 12.8 | 203.2 | 6.30 | 75 | 12 | B | 45 | 520 | 580 | 89.7 | 250 | 198 | ferrite+bainite | |
| 2 | 12.8 | 254.0 | 5.04 | 84 | 10 | B | 50 | 485 | 542 | 89.4 | 210 | 172 | ferrite+pearlite | |
| 3 | 14.5 | 304.8 | 4.76 | 65 | 9 | B, P | 65 | 480 | 545 | 88.1 | 285 | 193 | ferrite+bainite | |
| 5 | 14.2 | 203.2 | 6.99 | 52 | 12 | P | 85 | 580 | 630 | 92.1 | 235 | 222 | bainite | Inv. ex. |
| 6 | 14.5 | 254.0 | 5.71 | 63 | 11 | P | 90 | 540 | 642 | 84.1 | 215 | 217 | ferrite+bainite | |
| 7 | 14.5 | 304.8 | 4.76 | 60 | 15 | B | 55 | 475 | 590 | 80.5 | 198 | 171 | ferrite+pearlite | |
| 8 | 16.5 | 406.4 | 4.06 | 85 | 14 | B | 55 | 465 | 530 | 87.7 | 278 | 181 | ferrite+bainite | |
| 9 | 12.8 | 203.2 | 6.30 | 55 | 12 | B, P | 65 | 497 | 540 | 92.0 | 292 | 188 | ferrite+bainite | |
| 10 | 12.8 | 254.0 | 5.04 | 50 | 14 | B | 62 | 532 | 590 | 90.2 | 245 | 197 | ferrite+bainite | |
| 11 | 14.5 | 304.8 | 4.76 | 83 | 11 | B | 55 | 466 | 542 | 86.0 | 278 | 185 | ferrite+bainite | |
| 12 | 16.8 | 406.4 | 4.13 | 81 | 8 | B, P | 60 | 484 | 565 | 85.7 | 247 | 190 | ferrite+bainite | |
| 14 | 14.5 | 254.0 | 5.71 | 84 | 14 | P | 105 | 505 | 566 | 89.2 | 298 | 175 | ferrite+pearlite | Comp. ex. |
| 15 | 14.5 | 254.0 | 5.71 | 40 | 22 | M | 43 | 592 | 610 | 97.0 | 108 | 205 | bainite | |
| 16 | 14.5 | 254.0 | 5.71 | 35 | 7 | B | 29 | 648 | 681 | 95.1 | 288 | 172 | ferrite+pearlite | |
| 17 | 14.5 | 254.0 | 5.71 | 65 | 13 | B | 44 | 392 | 502 | 78.1 | 342 | 168 | ferrite+pearlite | |
| 18 | 14.5 | 254.0 | 5.71 | 78 | 11 | B | 51 | 532 | 545 | 97.6 | 278 | 198 | ferrite+bainite | |
| 19 | 14.5 | 254.0 | 5.71 | 43 | 12 | B | 60 | 633 | 692 | 91.5 | 88 | 234 | bainite | |
| 20 | 14.5 | 254.0 | 5.71 | 37 | 11 | B, M | 45 | 621 | 666 | 93.2 | 108 | 310 | bainite | |
| 21 | 14.5 | 254.0 | 5.71 | 78 | 27 | B, P | 46 | 521 | 545 | 95.5 | 245 | 185 | ferrite+bainite | |

EP 2 752 499 B1

13

Nos. 1 to 14 which are shown in Table 2 are invention examples, while Nos. 15 to 21 are comparative examples.

Nos. 1 to 14 had metal structures of the base material steel plates which contained, by area rate, 50 to 92% of polygonal ferrite, had Y/T's of the steel pipes of 95% or less, had tensile strengths (TS) of 525 MPa or more, had absorption energies at -20°C ($vE_{-20}$) of 150J or more, and had excellent low temperature toughnesses. The balances of the metal structures were bainite and/or pearlite. Further, the harnesses of the weld zones of the electric resistance welding were Hv160 to 240, and the structures were bainite, fine grain ferrite and pearlite, or fine grain ferrite and bainite.

No. 15 had a fast primary cooling rate, so the area rate of the polygonal ferrite became small. As a result, the yield strength rose, the Y/T became higher, and, further, the total final reduction rate in the hot rolling was small, so the polygonal ferrite became larger in grain size. Furthermore, the coiling temperature was low, so martensite formed and the toughness fell.

No. 16 had a high cooling rate switching temperature, so the area rate of the polygonal ferrite became small. As a result, the yield strength rose and the Y/T became higher.

No. 17 had a small amount of Mn and a lower strength.

No. 18 had an excessive amount of Nb, so excessive precipitation strengthening caused the yield strength to rise and the Y/T to become higher.

No. 19 had an excessive amount of C and, furthermore, a high cooling rate switching temperature, so the area rate of the polygonal ferrite became smaller and, further, the toughness fell.

No. 20 had excessive amounts of Mn and Mo and, furthermore, had a high cooling rate switching temperature, so the area rate of the polygonal ferrite became smaller, martensite was formed making the strength rise, and the Y/% became higher. Further, the amount of S was excessive, so the toughness fell. Furthermore, the water cooling stop temperature in the heat treatment of the electric resistance weld zone was low, so the hardness of the electric resistance weld zone became higher.

No. 21 had a low amount of C and an excessive amount of Nb, so the strength rose and the Y/T became higher.

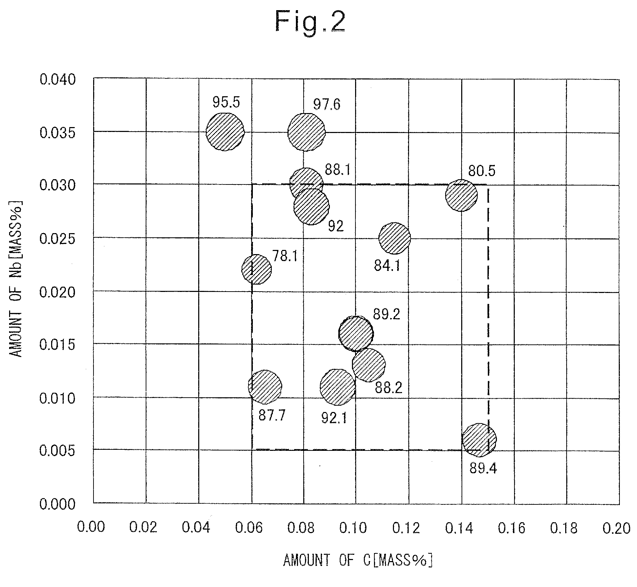

FIG. 2 shows the relationship between the amount of C, the amount of Nb, and the Y/T of invention examples and comparative examples produced using the method of production of the present invention. The numerical values in the graph indicate the Y/T. The top left of FIG. 2, that is, the low C, high Nb region, is the composition in conventional electric resistance welded steel pipe, while the bottom right, that is, the high C, low Nb region, is the composition in electric resistance welded steel pipe of the present invention. As will be understood from FIG. 2, the electric resistance welded steel pipe of the present invention has a low enough Y/T so that no buckling occurs due to reeling and unreeling compared with conventional electric resistance welded steel pipe.

Industrial Applicability

According to the present invention, it is possible to provide thick wall electric resistance welded steel pipe for line pipe use which achieves both a low Y/T and low temperature toughness and a method of production of the same. Electric resistance welded steel pipe which has a low enough Y/T so that no buckling occurs due to reeling and unreeling is obtained, so the industrial applicability is great.

**Claims**

1. Thick wall electric resistance welded steel pipe with a wall thickness/outside diameter ratio of 4.0 to 7.0% which is comprised of a base material steel plate shaped into a tube and welded by electric resistance .welding,

   said thick wall electric resistance welded steel pipe **characterized in that**
   said base material steel plate has a chemical composition which comprises, by mass%,
   C: 0.06 to 0.15%,
   Mn: 1.00 to 1.65%,
   Ti: 0.005 to 0.020%,
   Nb: 0.005 to 0.030%,
   N: 0.001 to 0.006%,
   Si: 0.01 to 0.45%, and
   Al: 0.001 to 0.08%,
   restricts
   P to 0.02% or less and
   S to 0.005% or less,
   contains as optional added elements
   Mo: less than 0.20%,

Cu: 0.50% or less,
Ni: 0.50% or less,
Cr: 1.00% or less,
.V: 0.10% or less,
Ca: 0.0050% or less, and
REM: 0.0050% or less,
has a Ceq which is found by the following formula (1) of 0.32 to 0.43, and has a balance of Fe and unavoidable impurities,
a metal structure of said base material steel plate containing, by area ratio, 50 to 92% of.polygonal ferrite,
said polygonal ferrite having an average grain size of 15 $\mu$m or less,
an electric resistance weld zone having a hardness of Hv160 to 240, and
a structure of said electric resistance weld zone being bainite, fine grain ferrite, and pearlite or fine grain ferrite and bainite:

$$Ceq=[C]+[Mn]/6+([Cr]+[Mo]+[V])/5+([Ni]+[Cu])/15... \quad (1)$$

where, [C], [Mn], [Cr], [Mo], [V], [Ni], and [Cu] are respectively the contents [mass%] of C, Mn, Cr, Mo, V, Ni, and Cu and elements which are intentionally not added are indicated as 0.

2. The thick wall electric resistance welded steel pipe as set forth in claim 1 **characterized in that** said base material steel plate has a metal structure with Nb carbonitrides of an average grain size of 40 to 100 nm.

3. A method of production of thick wall electric resistance welded steel pipe **characterized by** casting steel which comprises, by mass%,

C: 0.06 to 0.15%,
Mn: 1.00 to 1.65%,
Ti: 0.005 to 0.020%,
Nb: 0.005 to 0.030%,
N: 0.001 to 0.006%,
Si: 0.01 to 0.45%, and
Al: 0.001 to 0.08%,
restricts
P to 0.02% or less,
S to 0.005% or less,
contains, as optional added elements,
Mo: less than 0.20%,
Cu: 0.50% or less,
Ni: 0.50% or less,
Cr: 1.00% or less,
V: 0.10% or less,
Ca: 0.0050% or less, and
REM: 0.0050% or less,
has a Ceq which is found by the following formula (1) of 0.32 to 0.43, and has a balance of Fe and unavoidable impurities, to obtain a steel slab,
heating said steel slab to 1050 to 1300°C, hot rolling this by a total final rolling rate of 35 to 90% to obtain hot rolled steel plate,
cooling said hot rolled steel plate from an $Ar_3$ point or more to 630 to 720°C by a 5 to 20°C/s cooling rate for primary cooling,
then cooling by a cooling rate faster than the primary cooling and not more than 60°C/s for secondary cooling,
coiling at 450 to 600°C,
shaping the coiled steel plate into a tube with a wall thickness/outside diameter ratio of 4.0 to 7.0%,
welding the abutting faces by electric resistance welding,
then heating the electric resistance weld zone to an $Ac_3$ point to 1100°C,
then air cooling this to room temperature or water cooling to 200 to 650°C then air cooling it:

$$Ceq=[C]+[Mn]/6+([Cr]+[Mo]+[V])/5+([Ni]+[Cu])/15...(1)$$

where, [C], [Mn], [Cr], [Mo], [V], [Ni], and [Cu] are respectively the contents [mass%] of C, Mn, Cr, Mo, V, Ni, and Cu and elements which are intentionally not added are indicated as 0.

**Patentansprüche**

1.  Dickwandiges widerstandsgeschweißtes Stahlrohr mit einem Verhältnis von Wanddicke/Außendurchmesser von 4,0 bis 7,0%, welches eine Basismaterial-Stahlplatte, die zu einem Rohr geformt wurde und durch Widerstandsschweißen geschweißt wurde, umfasst,
    wobei das dickwandige widerstandsgeschweißte Stahlrohr **dadurch gekennzeichnet ist, dass**
    die Basismaterial-Stahlplatte eine chemische Zusammensetzung aufweist, welche, in Massen-%, umfasst,
    C: 0,06 bis 0,15%;
    Mn: 1,00 bis 1,65%,
    Ti: 0,005 bis 0,020%,
    Nb: 0,005 bis 0,030%,
    N: 0,001 bis 0,006%,
    Si: 0,01 bis 0,45% und
    Al: 0,001 bis 0,08%,
    dass
    P auf 0,02% oder weniger und
    S auf 0,005% oder weniger beschränkt sind,
    als optional zugegebene Elemente

    Mo: weniger als 0,20%,
    Cu: 0,50% oder weniger,
    Ni: 0,50% oder weniger,
    Cr: 1,00% oder weniger,
    V: 0,10% oder weniger,
    Ca: 0,0050% oder weniger und
    Seltenerdmetalle (REM): 0,0050% oder weniger enthält,
    ein CÄq von 0,32 bis 0,43 aufweist, das durch die folgende Formel (1) ermittelt wird,
    und einen Rest aus Fe und unvermeidbaren Verunreinigungen aufweist,
    eine Metallstruktur der Basismaterial-Stahlplatte, die, bezogen auf das Flächenverhältnis, 50 bis 92% polygonales Ferrit enthält,
    wobei das polygonale Ferrit eine mittlere Korngröße von 15 $\mu$m oder weniger aufweist, eine Widerstandsschweißzone eine Härte von Hv 160 bis 240 aufweist und
    eine Struktur der Widerstandsschweißzone Bainit, feinkörniges Ferrit und Perlit oder feinkörniges Ferrit und Bainit ist:

$$CÄq = [C] + [Mn] / 6 + ([Cr] + [Mo] + [V]) / 5 + ([Ni] + [Cu]) / 15 ... (1)$$

    wobei [C], [Mn], [Cr], [Mo], [V], [Ni] und [Cu] jeweils die Gehalte (Massen-%) an C, Mn, Cr, Mo, V, Ni und Cu sind und Elemente, die gewollt nicht zugegeben werden, mit 0 angegeben sind.

2.  Das dickwandige widerstandsgeschweißte Stahlrohr nach Anspruch 1, **dadurch gekennzeichnet, dass** die Basismaterial-Stahlplatte eine Metallstruktur mit Nb- Carbonitriden mit einer mittleren Korngröße von 40 bis 100 nm aufweist.

3.  Ein Verfahren zur Herstellung eines dickwandigen widerstandsgeschweißten Stahlrohres, **gekennzeichnet durch** Gießen von Stahl, welcher, in Massen-%, umfasst

    C: 0,06 bis 0,15%;
    Mn: 1,00 bis 1,65%,
    Ti: 0,005 bis 0,020%,

Nb: 0,005 bis 0,030%,

N: 0,001 bis 0,006%,

Si: 0,01 bis 0,45% und

Al: 0,001 bis 0,08%,

dass

P auf 0,02% oder weniger,

S auf 0,005% oder weniger beschränkt sind,

als optional zugegebene Elemente

Mo: weniger als 0,20%,

Cu: 0,50% oder weniger,

Ni: 0,50% oder weniger,

Cr: 1,00% oder weniger,

V: 0,10% oder weniger,

Ca: 0,0050% oder weniger und

Seltenerdmetalle (REM): 0,0050% oder weniger enthält,

ein CÄq von 0,32 bis 0,43, das **durch** die folgende Formel (1) ermittelt wird, aufweist, und einen Rest aus Fe und unvermeidbaren Verunreinigungen aufweist, um eine Stahlbramme zu erhalten,

Erwärmen der Stahlbramme auf 1050 bis 1300°C,

Warmwalzen derselben bei einem Gesamt-Endwalzgrad von 35 bis 90%, um die warmgewalzte Stahlplatte zu erhalten,

Abkühlen der warmgewalzten Stahlplatte von einem Ar$_3$-Punkt oder mehr auf 630 bis 720°C bei einer Abkühlgeschwindigkeit von 5 bis 20°C/s für das primäre Abkühlen, dann Abkühlen bei einer Abkühlgeschwindigkeit, die höher ist als das primäre Abkühlen, und nicht mehr als 60°C/s für das sekundäre Abkühlen,

Aufrollen bei 450 bis 600°C,

Formen der aufgerollten Stahlplatte zu einem Rohr mit einem Verhältnis von Wanddicke/Außendurchmesser von 4,0 bis 7,0%,

Schweißen der angrenzenden Flächen **durch** Widerstandsschweißen, dann Erwärmen der Widerstandsschweißzone auf einen Ac$_3$-Punkt bis 1100°C, dann Luftkühlen desselben auf Raumtemperatur oder Wasserkühlung auf 200 bis 650°C, dann Luftkühlen desselben:

$$\text{CÄq} = [C] + [Mn] / 6 + ([Cr] + [Mo] + [V]) / 5 + ([Ni] + [Cu]) / 15 \;...(1)$$

wobei [C], [Mn], [Cr], [Mo], [V], [Ni] und [Cu] jeweils die Gehalte (Massen-%) an C, Mn, Cr, Mo, V, Ni und Cu sind und Elemente, die gewollt nicht zugegeben werden, mit 0 angegeben sind.

**Revendications**

1. Tuyau en acier à paroi épaisse soudé par résistance électrique ayant un rapport épaisseur de paroi/diamètre extérieur de 4,0 à 7,0 % qui comprend une plaque d'acier comme matériau de base façonnée en forme de tube et soudée par soudage par résistance électrique,

ledit tuyau en acier à paroi épaisse soudé par résistance électrique étant **caractérisé en ce que**

ladite plaque d'acier comme matériau de base a une composition chimique qui comprend, en % en poids,

C : de 0,06 à 0,15 %,

Mn: de 1,00 à 1,65 %,

Ti : de 0,005 à 0,020 %,

Nb : de 0,005 à 0,030 %,

N : de 0,001 à 0,006 %,

Si : de 0,01 à 0,45%, et

Al : de 0,001 à 0,08%,

limite

P à 0,02 % ou moins et

S à 0,005 % ou moins,

contient à titre d'éléments facultatifs ajoutés

Mo : moins de 0,20 %,

Cu : 0,50 % ou moins,
Ni : 0,50 % ou moins,
Cr : 1,00 % ou moins,
V : 0,10 % ou moins,
Ca : 0,0050 % ou moins, et
REM : 0,0050 % ou moins,
a un Ceq qui est calculé par la formule (1) suivante de 0,32 à 0,43, le reste étant du Fe et des impuretés inévitables, une structure métallique de ladite plaque d'acier comme matériau de base contenant, en rapport en surface, de 50 à 92 % de ferrite polygonale,
ladite ferrite polygonale ayant une taille de grain moyenne de 15 $\mu$m ou moins, une zone de soudure par résistance électrique ayant une dureté de Hv160 à 240, et une structure de ladite zone de soudure par résistance électrique étant la bainite, la ferrite à grains fins, et la perlite ou la ferrite à grains fins et la bainite :

$$Ceq = [C] + [Mn]/6 + ([Cr] + [Mo] + [V])/5 + ([Ni] + [Cu])/15 \dots \quad (1)$$

où [C], [Mn], [Cr], [Mo], [V], [Ni], et [Cu] sont respectivement les teneurs [% en poids] en C, Mn, Cr, Mo, V, Ni, et Cu, les éléments volontairement omis étant notés 0.

2. Tuyau en acier à paroi épaisse soudé par résistance électrique selon la revendication 1 **caractérisé en ce que** ladite plaque d'acier comme matériau de base a une structure métallique comportant des carbonitrures de Nb ayant une taille de grain moyenne de 40 à 100 nm.

3. Méthode de production d'un tuyau en acier à paroi épaisse soudé par résistance électrique **caractérisée par** coulage d'un acier qui comprend, en % en poids,
C : de 0,06 à 0,15 %,
Mn : de 1,00 à 1,65 %,
Ti : de 0,005 à 0,020 %,
Nb : de 0,005 à 0,030 %,
N : de 0,001 à 0,006 %,
Si: de 0,01 à 0,45%, et
Al : de 0,001 à 0,08 %,
limite
P à 0,02 % ou moins,
S à 0,005 % ou moins,
contient à titre d'éléments facultatifs ajoutés
Mo : moins de 0,20 %,
Cu : 0,50 % ou moins,
Ni : 0,50 % ou moins,
Cr : 1,00 % ou moins,
V : 0,10 % ou moins,
Ca : 0,0050 % ou moins, et
REM : 0,0050 % ou moins,
a un Ceq qui est calculé par la formule (1) suivante de 0,32 à 0,43, le reste étant du Fe et des impuretés inévitables,
pour obtenir une brame d'acier,
le chauffage de ladite brame d'acier à 1050-1300 °C,
son laminage à chaud à un taux de laminage final total de 35 à 90 % pour obtenir une plaque d'acier laminée à chaud,
le refroidissement de ladite plaque d'acier laminée à chaud d'un point Ar$_3$ ou plus à 630-720 °C à une vitesse de refroidissement de 5 à 20 °C/s pour le refroidissement primaire,
puis son refroidissement à une vitesse de refroidissement plus rapide que le refroidissement primaire mais pas au-delà de 60 °C/s pour le refroidissement secondaire,
l'enroulement à 450-600 °C,
le façonnage de la plaque d'acier enroulée en forme de tube ayant un rapport épaisseur de paroi/diamètre extérieur de 4,0 à 7,0 %,
le soudage des faces d'aboutement par soudage par résistance électrique,
puis le chauffage de la zone de soudure par résistance électrique à une température allant d'un point Ac$_3$ à 1100 °C,
puis son refroidissement par air jusqu'à la température ambiante ou son refroidissement par eau jusqu'à 200-650 °C, puis refroidissement par air :

$$Ceq = [C] + [Mn]/6 + ([Cr] + [Mo] + [V])/5 + ([Ni] + [Cu])/15 \dots \quad (1)$$

où [C], [Mn], [Cr], [Mo], [V], [Ni], et [Cu] sont respectivement les teneurs [% en poids] en C, Mn, Cr, Mo, V, Ni, et Cu, les éléments volontairement omis étant notés 0.

# Fig.1A

# Fig.1B

# Fig.2

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3211255 A
- JP 63227715 A
- JP 8337816 A
- EP 2192203 A